(19) Europäisches Patentamt
European Patent Office
Office européen des brevets

(11) **EP 4 207 578 A1**

(12) **EUROPEAN PATENT APPLICATION**
published in accordance with Art. 153(4) EPC

(43) Date of publication:
**05.07.2023 Bulletin 2023/27**

(21) Application number: **21874797.0**

(22) Date of filing: **26.04.2021**

(51) International Patent Classification (IPC):
**H02P 3/22** *(2006.01)*

(52) Cooperative Patent Classification (CPC):
**H02P 3/22**

(86) International application number:
**PCT/JP2021/016636**

(87) International publication number:
**WO 2022/070490 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2020 JP 2020163821**

(71) Applicant: **DMG Mori Co., Ltd.
Yamatokoriyama-shi, Nara 639-1160 (JP)**

(72) Inventors:
• **IKEGAMI, Takakazu
Yamatokoriyama-shi, Nara 639-1160 (JP)**
• **MORIMOTO, Ryota
Yamatokoriyama-shi, Nara 639-1160 (JP)**

(74) Representative: **Isarpatent
Patent- und Rechtsanwälte Barth
Charles Hassa Peckmann & Partner mbB
Friedrichstrasse 31
80801 München (DE)**

(54) **ROTATION SPEED ASSESSMENT DEVICE**

(57) A rotation speed assessment device (1) assesses suitability of a rotation speed of a motor (11) in a rotation device (10) having the motor (11) connected to an object to be rotated (20) to rotate the object to be rotated (20) and having a rotation control unit (13) controlling operation of the motor (11) and carrying out emergency stopping of the motor (11) when the motor (11) becomes uncontrollable. The rotation speed assessment device (1) has an inertia estimation unit (2) estimating an inertia of the motor (11) and object to be rotated (20), an assessment unit (3) assessing suitability of a planned rotation speed based on the inertia estimated by the inertia estimation unit (2), and a notification unit (4) providing a notification when the planned rotation speed is assessed as unsuitable by the assessment unit (3).

*FIG. 1*

EP 4 207 578 A1

**Description**

Technical Field

0001 The present invention relates to a rotation speed assessment device that assesses suitability of a motor rotation speed in a rotation device having a motor rotating an object to be rotated and a rotation control unit controlling operation of the motor.

Background Art

0002 For example, in the field of machine tools, a rotation device is used to rotate a workpiece or a tool as an object to be rotated. A typical rotation device has a motor connected to an object to be rotated to rotate the object and a rotation control unit controlling operation of the motor.

0003 The rotation control unit typically includes a circuit called "dynamic braking circuit". The dynamic braking circuit is used to carry out emergency stopping of the motor when the motor rotating becomes uncontrollable by an amplifier connected to the motor due to power outage or any other cause. A known example of such a rotation device including a dynamic braking circuit is a motor driving device disclosed in Japanese Patent No. 6285477 (Patent Literature 1).

0004 The disclosed motor driving device consists of: an inverter driving a motor; a rotation speed obtention unit obtaining a rotation speed of the motor; an inertia information storage storing information on the inertia of the motor; a rotational energy calculation unit calculating a rotational energy of the motor based on the rotation speed and inertia of the motor; a dynamic braking circuit generating a deceleration torque through dynamic braking of the motor in emergency stopping of the motor; a tolerance information storage storing information on the tolerance of a resistance in the dynamic braking circuit; a power element operation unit turning on a power element of one of upper and lower arms and turning off a power element of the other of the upper and lower arms in the emergency stopping of the motor; a dynamic braking circuit operation unit operating a switch of the dynamic braking circuit; and a tolerance comparison unit comparing the rotational energy of the motor with the tolerance of the dynamic braking circuit.

0005 When the rotational energy of the motor exceeds the tolerance of the dynamic braking circuit, the dynamic braking circuit operation unit does not actuate the dynamic braking circuit. When the rotational energy of the motor does not exceed the tolerance of the dynamic braking circuit, the dynamic braking circuit operation unit actuates the dynamic braking circuit. In the case where the rotational energy of the motor exceeds the tolerance of the dynamic braking circuit, the dynamic braking circuit operation unit causes the motor to idle for a while, whereby the rotation speed of the motor is reduced. After the rotational energy of the motor reaches or falls below the tolerance of the dynamic braking circuit, the dynamic braking circuit operation unit actuates the dynamic braking circuit.

0006 By operating the dynamic braking circuit operation unit in this matter, this conventional motor driving device prevents the dynamic braking circuit from being damaged.

Citation List

Patent Literature

0007 Patent Literature 1: Japanese Patent No. 6285477

Summary of Invention

Technical Problem

0008 In a machine tool as described above, the object to be rotated by the motor includes, besides the workpiece or the tool, a spindle and other elements for holding the workpiece or the tool. Therefore, emergency stopping of the motor should be carried out taking into account a rotational energy calculated based on not only the inertia of the motor but also the inertia of the object to be rotated.

0009 However, the above-described conventional motor driving device calculates a rotational energy of the motor based on only the inertia of the motor; therefore, the conventional motor driving device is not capable of accurately calculating the energy necessary for emergency stopping of the motor.

0010 A spindle in a machine tool is never changed. Therefore, the inertia of the spindle can be calculated based on the design shape and material thereof. On the other hand, the machine tool machines various workpieces different in size and shape. Further, the machine tool uses various tools different in size and shape in accordance with the type of machining. Therefore, in order to accurately calculate the energy necessary for emergency stopping of the motor in operation, it is necessary to accurately recognize the inertia of the workpiece being machined or the inertia of the tool being used in addition to the inertia of the motor and spindle.

0011 Further, the conventional motor driving device is configured to cause the motor to idle for a while when the rotational energy of the motor exceeds the tolerance of the dynamic braking circuit. This will achieve prevention of seizing of the dynamic braking circuit but will result in failure to achieve the original purpose, i.e., emergency stopping of the motor.

0012 In view of the above-described background, the present inventors have obtained the following findings: if the rotational energy of the motor and object to be rotated is within the tolerance of the dynamic braking circuit, it is possible to carry out emergency stopping of the motor without bringing about seizing of the dynamic braking circuit; and, if the inertia of the motor and object to be rotated is accurately obtained, it is possible to calculate a motor rotation speed which allows emergency stopping of the motor to be carried out without bringing about seizing of the dynamic braking circuit, in other words, if the inertia of the motor and object to be rotated is accurately obtained, it is possible to assess whether a rotation speed planned for the motor allows emergency stopping of the motor to be carried out without bringing about seizing of the dynamic braking circuit.

0013 Accordingly, the object of the present invention is to provide a rotation speed assessment device which assesses whether a rotation speed planned for a motor allows emergency stopping of the motor.

Solution to Problem

0014 To solve the above-described problems, the present invention provides a rotation speed assessment device assessing suitability of a rotation speed of a motor of a rotation device having the motor and a rotation control unit, the motor being connected to an object to be rotated to rotate the object to be rotated, the rotation control unit controlling operation of the motor and carrying out emergency stopping of the motor when the motor becomes uncontrollable due to interruption of electricity supply to the motor while the motor is in operation, the rotation speed assessment device having:

> an inertia estimation unit configured to estimate an inertia of the motor and object to be rotated;
> an assessment unit configured to assess, based on the inertia estimated by the inertia estimation unit, whether a planned rotation speed of the motor planned as a control target in the rotation control unit is suitable or unsuitable in terms of whether the planned rotation speed allows the emergency stopping of the motor to be carried out within an allowable time; and
> a notification unit configured to, when the planned rotation speed is assessed as unsuitable by the assessment unit, provide a notification that the planned rotation speed is unsuitable.

0015 In this rotation speed assessment device, the inertia estimation unit estimates an inertia of the motor and object to be rotated. Note that the object to be rotated is an object to be driven and rotated by the motor. For example, in the case of a spindle device of a machine tool, the object to be rotated includes a spindle, a chuck mounted on the spindle, and a workpiece clamped by the chuck. In the case of a tool spindle device, the object to be rotated includes a spindle and a tool attached to the spindle.

0016 Based on the inertia estimated by the inertia estimation unit (estimated inertia), the assessment unit assesses whether a rotation speed planned for the motor is suitable or unsuitable. For example, the rotational energy of the motor and object to be rotated can be calculated based on the inertia of the motor and object to be rotated and the rotation speed. Further, the time needed for the rotation control unit to carry out the emergency stopping of the motor can be calculated based on the energy consumption per unit time in the emergency stopping of the motor and the rotational energy of the motor and object to be rotated.

0017 Thus, where an allowable time for the emergency stopping of the motor is determined and a rotation speed planned for the motor (planned rotation speed) is determined, an allowable inertia for allowing the emergency stopping of the motor rotating at the planned rotation speed to be carried out within the allowable time (i.e., a threshold set with respect to the planned rotation speed) can be obtained. Accordingly, the assessment unit can compare the estimated inertia with the allowable inertia. When the estimated inertia does not exceed the allowable inertia, the assessment unit assesses the planned rotation speed as suitable. When the estimated inertia exceeds the allowable inertia, the assessment unit assesses the planned rotation speed as unsuitable.

0018 Alternatively, where an allowable time for the emergency stopping of the motor is determined and the inertia of the motor and object to be rotated is estimated, an allowable rotation speed for allowing the emergency stopping of the motor to be carried out within the allowable time (i.e., a threshold set with respect to the estimated inertia) can be obtained. Accordingly, the assessment unit can compare the planned rotation speed with the allowable rotation speed. When the planned rotation speed does not exceed the allowable rotation speed, the assessment unit assesses the planned rotation speed as suitable. When the planned rotation speed exceeds the allowable rotation speed, the assessment unit assesses the planned rotation speed as unsuitable.

0019 When the planned rotation speed is assessed as unsuitable by the assessment unit, this is notified by the notification unit. Examples of the manner of the notification include showing on an appropriate display and audio output using a speaker.

0020 Thus, the rotation speed assessment device according to the present invention is configured to assess whether a rotation speed planned for the motor allows the emergency stopping of the motor to be carried out within an allowable time, so that it is possible to rotate the motor with the planned rotation speed if the planned rotation speed is suitable and it is possible to take an action such as stopping the motor if the planned rotation speed is unsuitable. This enables the motor to be stopped within the allowable time without fail when the emergency stopping of the motor is required.

0021 Further, this rotation speed assessment device is configured such that not only the inertia of the motor but also the inertia of the object to be rotated to be driven by the motor are estimated by the inertia estimation unit and the time needed for the emergency stopping of the motor is calculated based on the inertia of the motor and object to be rotated. This enables the time needed for the emergency stopping of the motor to be calculated accurately; consequently, the assessment whether the planned rotation speed is suitable or unsuitable is made accurately.

0022 In the present invention, in estimating the inertia of the object to be rotated, the inertia estimation unit may obtain three-dimensional model data of the object to be rotated from the outside and estimate the inertia of the object to be rotated based on the obtained three-dimensional model data.

0023 Alternatively, the inertia estimation unit may obtain from the outside an image of the object to be rotated captured by a camera with respect to an externally observable element of the object to be rotated and estimate the inertia of the object to be rotated based on the obtained image.

0024 In the present invention, the inertia estimation unit may obtain an acceleration time taken for the motor to reach the planned rotation speed as well as the planned rotation speed from the rotation device when the motor is rotated at the planned rotation speed and estimate the inertia of the motor and object to be rotated based on the obtained acceleration time and planned rotation speed.

0025 In the present invention, the assessment unit may be configured to, when the planned rotation speed is assessed as unsuitable, estimate a rotation speed allowed with respect to the estimated inertia and transmit data on the estimated rotation speed to the rotation control unit of the rotation device. With this configuration, the rotation control unit can rotate the motor with a suitable rotation speed corresponding to the estimated inertia.

Advantageous Effects of Invention

0026 As described above, the rotation speed assessment device according to the present invention is configured to assess whether a rotation speed planned for the motor allows the emergency stopping of the motor to be carried out within an allowable time, so that it is possible to rotate the motor with the planned rotation speed if the planned rotation speed is suitable and it is possible to take an action such as stopping the motor if the planned rotation speed is unsuitable. This enables the motor to be stopped within the allowable time without fail when the emergency stopping of the motor is required.

0027 Further, this rotation speed assessment device is configured such that not only the inertia of the motor but also the inertia of the object to be rotated to be driven by the motor are estimated by the inertia estimation unit and the time needed for the emergency stopping of the motor is calculated based on the inertia of the motor and object to be rotated. This enables the time needed for the emergency stopping of the motor to be calculated accurately; consequently, the assessment whether the planned rotation speed is suitable or unsuitable is made accurately.

Brief Description of Drawings

0028

FIG. 1 is a block diagram illustrating a rotation speed assessment device according to a first embodiment of the present invention together with a rotation device;
FIG. 2 is a circuit diagram illustrating a spindle motor circuit including an emergency stop circuit provided in a rotation control unit in the first embodiment;
FIG. 3 is a diagram showing a relationship between an allowable inertia and an allowable rotation speed allowing emergency stopping of a motor and an object to be rotated to be carried out within a predetermined time;
FIG. 4 is a block diagram illustrating a rotation speed assessment device according to a second embodiment of the present invention together with the rotation device; and
FIG. 5 is a block diagram illustrating a rotation speed assessment device according to a third embodiment of the present invention together with the rotation device.

Description of Embodiments

0029 Hereinafter, specific embodiments of the present invention will be described with reference to the drawings.
0030

[First Embodiment]

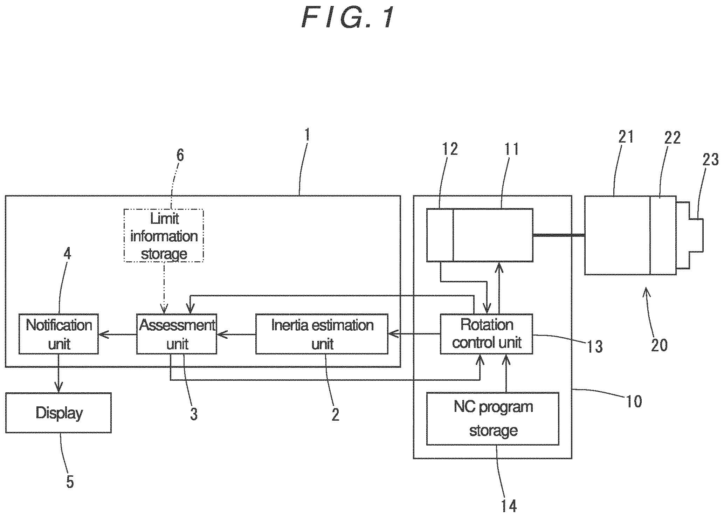

First, a rotation speed assessment device according to a first embodiment of the present invention is described with reference to FIGS. 1 to 3. As illustrated in FIG. 1, the rotation speed assessment device 1 according to this embodiment assesses whether a rotation speed in a rotation device 10 is suitable or unsuitable.

0031 The rotation device 10 in this embodiment is a component of an NC lathe and drives and rotates an object to be rotated 20 that is also a component of the NC lathe. The object to be rotated 20 is constituted by a spindle 21 rotatably supported by a headstock (not illustrated), a chuck 22 mounted on the distal end of the spindle 21, and a workpiece 23 clamped by the chuck 22. Although the rotation device 10 and the object to be rotated 20 to be driven by the rotation device 10 in this embodiment are components of an NC lathe, the present invention is not limited thereto. The rotation device 10 and the object to be rotated 20 may be components of a machining center or any other machine tool or may be components of any other type of machine.

0032 The rotation device 10 has a spindle motor (synchronous motor) 11, a rotary encoder 12, a rotation control unit 13, and an NC program storage 14. The spindle motor 11 is connected to the spindle 21 to rotate the spindle 21. The rotary encoder 12 detects the rotation speed and the like of the spindle motor 11. The rotation control unit 13 controls operation of the spindle motor 11.

0033 The NC program storage 14 is a functional unit that stores an NC program to be used in machining in the NC lathe. The NC program storage 14 is composed of an appropriate storage medium such as a RAM. Note that the NC program contains positional commands for feed axes, rotational commands (rotation direction and rotation speed) for the object to be rotated 20, and other commands.

0034 The rotation control unit 13 is a functional unit that controls rotational operation of the spindle motor 11. When the NC program stored in the NC program storage 14 is executed, the rotation control unit 13 rotates the spindle motor 11 with a commanded rotation direction and a commanded rotation speed in accordance with the rotational commands contained in the NC program. In this process, the rotation control unit 13 feedback controls the spindle motor 11 based on the rotation speed of the spindle motor 11 detected by the rotary encoder 12. The commands other than the rotational commands contained in the NC program are executed for control by control units other than the rotation control unit 13. For instance, the positional commands for the feed axes are executed for control by a feed-axis control unit. The same applies to the other commands.

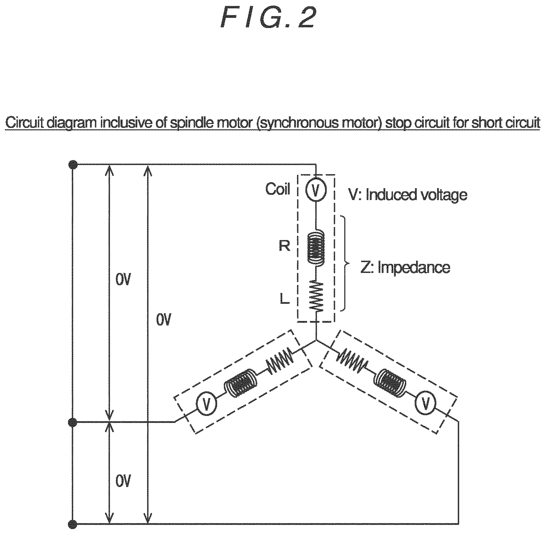

0035 The rotation control unit 13 includes a circuit (emergency stop circuit, conventionally called "dynamic braking circuit") for carrying out emergency stopping of the spindle motor 11 when electricity supply to the spindle motor 11 is interrupted by power outage or any other cause. This emergency stop circuit is to be connected to the spindle motor 11 in the event of interruption of electricity supply to form a short circuit as illustrated in FIG. 2 with the spindle motor 11 in the event of interruption of electricity supply. When electricity supply is interrupted, an induced current occurs in the spindle motor 11 due to idling of the spindle motor 11 and the object to be rotated 20. The short circuit causes this induced current to flow into a coil, so that the rotational energy of the spindle motor 11 and object to be rotated 20 is converted into heat and thereby consumed (i.e., copper loss occurs). Thereby, the spindle motor 11 is stopped. Note that the emergency stop circuit is not limited to such a dynamic braking circuit and may be, for example, a short circuit which is configured to, in the event of interruption of electricity supply, short-circuit a power line of the spindle motor 11 and a power line of an amplifier driving the spindle motor 11 so as to cause electricity to be consumed using only an internal resistance of the spindle motor 11.

0036 The rotation control unit 13 is composed of a computer including a CPU, a RAM, and a ROM and an electric or electronic circuit or any other circuit which has an appropriate configuration.

0037 Note that the copper loss $P_{loss}$ [J/s] in the emergency stop circuit illustrated in FIG. 2 can be calculated in accordance with Equation 1 below:

$$\text{(Equation 1)}$$

$$P_{loss} = 3RI^2 = R \cdot (K_m \cdot \omega_m)^2/(R^2 + (\omega_m \cdot p \cdot L)^2),$$

where R is the resistance per phase [$\Omega$], L is the inductance per phase [H], $K_m$ is the line-to-line induced voltage constant [Vrms/(rad/s)], $\omega_m$ is the rotational angular speed [rad/s] (the rotational angular speed is equivalent to the rotation seed [m/s]; therefore, the rotational angular speed is referred to as "rotation speed" hereinafter), and p is the number of pole pairs (1/2 of the number of poles).

0038 The rotation speed assessment device 1 consists of an inertia estimation unit 2, an assessment unit 3, and a notification unit 4. Note that the rotation speed assessment device 1 is composed of a computer including a CPU, a RAM, and a ROM. The inertia estimation unit 2, the assessment unit 3, and the notification unit 4 are functionally implemented by a computer program to execute the processes described later.

0039 The inertia estimation unit 2 obtains data on the time taken for the spindle motor 11 to reach a target rotation speed after starting rotation (acceleration time) and on the rotation speed reached from the rotation control unit 13 and estimates an inertia of the spindle motor 11 and object to be rotated 20 based on the obtained data.

0040 Between the acceleration time of the spindle motor 11, the inertia of the spindle motor 11 and object to be rotated 20, the output of the spindle motor 11 during acceleration, and the rotation speed, the following relational equation (Equation 2) holds:

$$\text{(Equation 2)}$$

$$I = (2P_{motor} \cdot t_{ac})/\omega^2,$$

where $t_{ac}$ [s] is the acceleration time of the spindle motor 11, I [kgm$^2$] is the inertia of the spindle motor 11 and object to be rotated 20, $P_{motor}$ [w] is the output of the spindle motor 11 during acceleration, and $\omega$ [rad/s] is the rotation speed. The inertia estimation unit 2 obtains data on the acceleration time $t_{ac}$ of the spindle motor 11 and on the rotation speed $\omega$ of the spindle motor 11 from the rotation control unit 13 and estimates the inertia I of the spindle motor 11 and object to be rotated 20 in accordance with Equation 2 above.

0041 Based on the inertia I of the spindle motor 11 and object to be rotated 20 estimated by the inertia estimation unit 2, the assessment unit 3 assesses whether the rotation speed $\omega$ (a rotation speed planned as a target rotation speed) of the spindle motor 11 is suitable or unsuitable. The assessment whether the rotation speed $\omega$ of the spindle motor 11 is suitable or unsuitable is made in terms of whether the rotation speed $\omega$ allows the spindle motor 11 and the object to be rotated 20 to be stopped within a predetermined time (allowable time) by the emergency stop circuit in the rotation control unit 13 in the event of interruption of electricity supply to the spindle motor 11. Note that the allowable time is a time during which a load being applied to the emergency stop circuit does not bring about seizing of the emergency stop circuit. The allowable time may use a time experimentally determined for individual circuit.

0042 The time (emergency stop) $t_s$ needed to stop the spindle motor 11 and the object to be rotated 20 with the emergency stop circuit can be calculated in accordance with Equation 3 below using the above-described copper loss $P_{loss}$ in the emergent stop circuit:

$$\text{(Equation 3)}$$

$$t_s = r_e/P_{loss},$$

where $r_e$ is the rotational energy of the spindle motor 11 and object to be rotated 20 and satisfies the following equation:

$$r_e = (I \cdot \omega^2)/2.$$

Therefore, the following equation holds:

$$t_s = (I \cdot \omega^2)/(2 \cdot P_{loss}).$$

0043 In order to allow the spindle motor 11 and the object to be rotated 20 to be stopped within the allowable time $t_{aw}$, the inertia I of the spindle motor 11 and object to be rotated 20 needs to satisfy Equation 4 blow:

$$\text{(Equation 4)}$$

$$t_{aw} > t_s = (I \cdot \omega^2)/(2 \cdot P_{loss}),$$

Therefore, the following equation holds:

$$I < 2 \cdot P_{loss} \cdot t_{aw}/\omega^2.$$

0044 In other words, an allowable inertia $I_{aw}$ for the spindle motor 11 and object to be rotated 20 for allowing the spindle motor 11 and object to be rotated 20 rotating at the rotation speed $\omega$ to be stopped within the allowable time $t_{aw}$ is represented by Equation 5 below:

$$\text{(Equation 5)}$$

$$I_{aw} = 2 \cdot P_{loss} \cdot t_{aw}/\omega^2.$$

0045 Accordingly, the assessment unit 3 compares the estimated inertia I of the spindle motor 11 and object to be rotated 20 estimated by the inertia estimation unit 2 with the allowable inertia (threshold) $I_{aw}$. When the estimated inertia I does not exceed the allowable inertia $I_{aw}$, the assessment unit 3 assesses the rotation speed $\omega$ of the spindle motor 11 as suitable. When the estimated inertia I exceeds the allowable inertia $I_{aw}$, the assessment unit 3 assesses the rotation speed $\omega$ of the spindle motor 11 as unsuitable.

0046 In an alternative configuration, the assessment unit 3 judges whether the estimated inertia I satisfies Equation 4 above. When the estimated inertia I satisfies Equation 4, the assessment unit 3 assesses the rotation speed $\omega$ of the spindle motor 11 as suitable. When the estimated inertia I does not satisfy Equation 4, the assessment unit 3 assesses the rotation speed $\omega$ of the spindle motor 11 as unsuitable.

0047 In another alternative configuration, the focus is placed on the rotation speed $\omega$ of the spindle motor 11. On the basis of Equation 4 above, where the allowable time $t_{aw}$ for the emergency stopping of the spindle motor 11 is determined and the inertia I of the spindle motor 11 and object to be rotated 20 is estimated, the rotation speed $\omega$ of the spindle motor 11 needs to satisfy Equation 6 below so as to allow the spindle motor 11 and the object to be rotated 20 to be stopped within the allowable time $t_{aw}$:

$$\text{(Equation 6)}$$

$$\omega < (2 \cdot P_{loss} \cdot t_{aw}/I)^{1/2}.$$

0048 In other words, an allowable rotation speed $\omega_{aw}$ for the spindle motor 11 and object to be rotated 20 for allowing the spindle motor 11 and the object to be rotated 20 with the inertia I to be stopped within the allowable time $t_{aw}$ is represented by Equation 7 below:

$$\text{(Equation 7)}$$

$$\omega_{aw} = (2 \cdot P_{loss} \cdot t_{aw}/I)^{1/2}$$

0049 Accordingly, the assessment unit 3 compares the rotation speed $\omega$ of the spindle motor 11 with the allowable rotation speed $\omega_{aw}$. When the rotation speed $\omega$ does not exceed the allowable rotation speed $\omega_{aw}$, the assessment unit 3 assesses the rotation speed $\omega$ as suitable. When the rotation speed $\omega$ exceeds the allowable rotation speed $\omega_{aw}$, the assessment unit 3 assesses the rotation speed $\omega$ as unsuitable.

0050 In an alternative configuration, the assessment unit 3 judges whether the rotation speed $\omega$ of the spindle motor 11 satisfies Equation 6 above established based on the estimated inertia I. When the rotation speed $\omega$ satisfies Equation 6, the assessment unit 3 assesses the rotation speed $\omega$ of the spindle motor 11 as suitable. When the rotation speed $\omega$ does not satisfy Equation 6, the assessment unit 3 assesses the rotation speed $\omega$ of the spindle motor 11 as unsuitable.

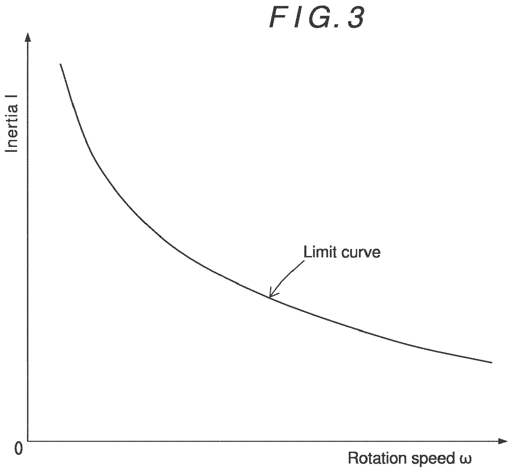

0051 The relationship between the inertia I of the combination of the spindle motor 11 and the object to be rotated 20 and the allowable rotation speed $\omega_{aw}$ for the spindle motor 11 and object to be rotated 20 with respect to the inertia I, in other words, the relationship between the rotation speed $\omega$ of the spindle motor 11 and object to be rotated 20 and the allowable inertia $I_{aw}$ for the combination of the spindle motor 11 and the object to be rotated 20 with respect to the rotation speed $\omega$, is represented by a limit curve shown in FIG. 3. With respect to the inertia I of the spindle motor 11 and object to be rotated 20, the rotation speed $\omega$ of the spindle motor 11 is suitable as situated below the limit curve and is unsuitable as situated above the limit curve.

0052 Upon assessing the rotation speed $\omega$ as unsuitable, the assessment unit 3 transmits to the rotation control unit 13 a command for deceleration to the allowable rotation speed $\omega_{aw}$ that is to be or has been calculated in accordance with Equation 7 above, so that the rotation speed of the spindle motor 11 is reduced to the allowable rotation speed $\omega_{aw}$.

0053 The notification unit 5 is connected to a display 5. The notification unit 5 displays on the display 5 whether the rotation speed $\omega$ of the spindle motor 11 assessed by the assessment unit 3 is suitable or unsuitable. In particular, it is preferred that the displaying of the rotation speed $\omega$ being assessed as unsuitable is performed in a highlighted manner or together with an alarm so that it is distinctly recognized from the outside.

0054 With the rotation speed assessment device 1 according to this embodiment having the above-described configuration, once the spindle motor 11 is driven by the rotation control unit 13 and starts rotation, the inertia estimation unit 2 obtains data on the acceleration time $t_{ac}$ taken for the spindle motor 11 to reach a target rotation speed after the start of the rotation and on the rotation speed $\omega$ reached from the rotation control unit 13, and estimates the inertia I of the spindle motor 11 and object to be rotated 20 based on the obtained acceleration time $t_{ac}$ and rotation speed $\omega$.

0055 Based on the inertia I of the spindle motor 11 and object to be rotated 20 estimated by the inertia estimation unit 2, the assessment unit 3 assesses whether the rotation speed $\omega$ of the spindle motor 11 is suitable or unsuitable, i.e., whether the rotation speed $\omega$ allows the spindle motor 11 and the object to be rotated 20 to be stopped within a predetermined time (the allowable time $t_{aw}$) by the emergency stop circuit in the rotation control unit 13 in the event of interruption of electricity supply to the spindle motor 11. The result of the assessment is displayed on the display 5 through the notification unit 5.

0056 Further, upon assessing the rotation speed $\omega$ as unsuitable, the assessment unit 3 transmits to the rotation control unit 13 a command for deceleration to the allowable rotation speed $\omega_{aw}$ that is to be or has been calculated in accordance with Equation 7 above. Consequently, the rotation speed $\omega$ of the spindle motor 11 is reduced to the allowable rotation speed $\omega_{aw}$ under control by the rotation control unit 13.

0057 As described above, with the rotation speed assessment device 1 according to this embodiment, it is possible to assess whether a rotation speed $\omega$ planned for the spindle motor 11 allows the emergency stopping of the spindle motor 11 to be carried out within the allowable time $t_{aw}$. Further, the rotation speed assessment device 1 is configured such that the result of the assessment is displayed on the display 5 through the notification unit 4, which enables a person involved such as an operator to notice if the rotation speed $\omega$ is unsuitable.

0058 Further, the rotation speed assessment device 1 according to this embodiment is configured such that, when the rotation speed $\omega$ is assessed as unsuitable, a command for reducing the rotation speed $\omega$ to the allowable rotation speed $\omega_{aw}$ is transmitted from the assessment unit 3 to the rotation control unit 13 and the rotation speed $\omega$ of the spindle motor 11 is reduced to the allowable rotation speed $\omega_{aw}$ by the rotation control unit 13, which enables the spindle motor 11 to be always rotated at a suitable speed.

0059 Further, the rotation speed assessment device 1 according to this embodiment is configured such that the inertia I of the spindle motor 11 and object to be rotated 20 to be driven by the spindle motor 11, instead of the inertia of only the spindle motor 11, is estimated by the inertia estimation unit 2 and the assessment whether the rotation speed $\omega$ of the spindle motor 11 is suitable or unsuitable is made based on the Inertia I of the spindle motor 11 and object to be rotated 20, which enables the assessment to be made accurately.

0060

[Second Embodiment]

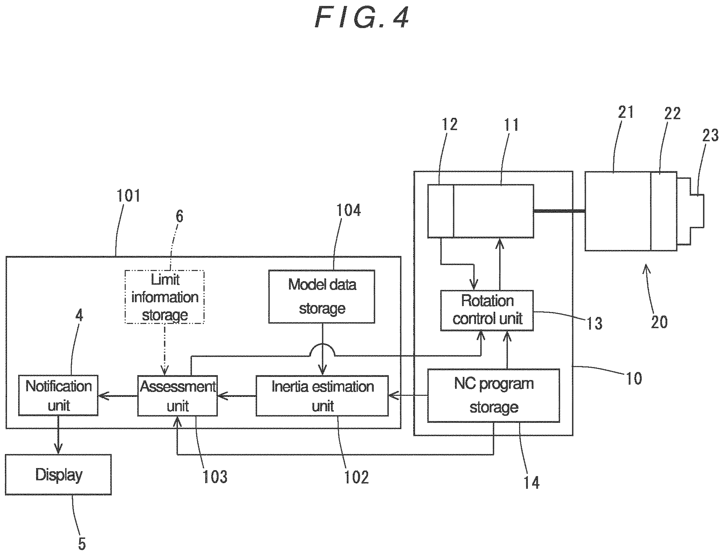

Next, a rotation speed assessment device according to a second embodiment of the present invention is described with reference to FIG. 4. This rotation speed assessment device 101 is different from the rotation speed assessment device 1 according to the first embodiment in that the inertia I of the spindle motor 11 and object to be rotated 20 is estimated differently and the assessment whether the rotation speed $\omega$ is suitable or unsuitable is made differently. In terms of the differences in configuration, the rotation speed assessment device 101 further has a model data storage 104 and has an inertia estimation unit 102 and an assessment unit 103 that carry out processes different from those carried out by the inertia estimation unit 2 and the assessment unit 3. Except for these differences, the rotation speed assessment device 101 is identical to the rotation speed assessment device 1 according to the first embodiment. Therefore, the components of the rotation speed assessment device 101 identical to those of the rotation speed assessment device 1 are denoted by the same reference numerals as used for the rotation speed assessment device 1. The rotation device 10 and the object to be rotated 20 are also identical to those in the first embodiment.

0061 The model data storage 104 is a functional unit that stores model data (shape and material) on a rotor unit of the spindle motor 11, the spindle 21, and the chuck 22 and modal data (shape and material) on each workpiece to be machined in the NC lathe. These model data are input and stored in advance into the model data storage 104 from the outside.

0062 When the NC program stored in the NC program storage 14 is to be executed, the inertia estimation unit 102 obtains from the NC program storage 14 information on the type of the workpiece contained in the NC program. The inertia estimation unit 102 recognizes the shape and material of the workpiece by referring to the model data storage 104 on the basis of the obtained workpiece information. The inertia estimation unit 102 also recognizes the shapes and materials of the rotor unit of the spindle motor 11, spindle 21, and chuck 22 by referring to the model data storage 104.

0063 The inertia estimation unit 102 subsequently estimates the masses of the spindle motor 11, spindle 21, chuck 22, and workpiece based on the obtained shapes and materials of them and theoretically estimates the total inertia I of them. Thereafter, the inertia estimation unit 2 transmits information on the inertia I to the assessment unit 103.

0064 The assessment unit 103 obtains from the NC program storage 14 information on the rotation speed $\omega$ of the spindle motor 11 (rotational commands) contained in the NC program to be executed. Based on the inertia I of the spindle motor 11 and object to be rotated 20 estimated by the inertia estimation unit 102 and the obtained rotation speed $\omega$ of the spindle motor 11, the assessment unit 103 assesses in the same manner as that in the first embodiment whether the rotation speed $\omega$ of the spindle motor 11 is suitable or unsuitable. This assessment unit 103 is different from the assessment unit 3 in the first embodiment in that the rotation speed $\omega$ of the spindle motor 11 used in the assessment process is the commanded speed contained in NC program.

0065

[Third Embodiment]

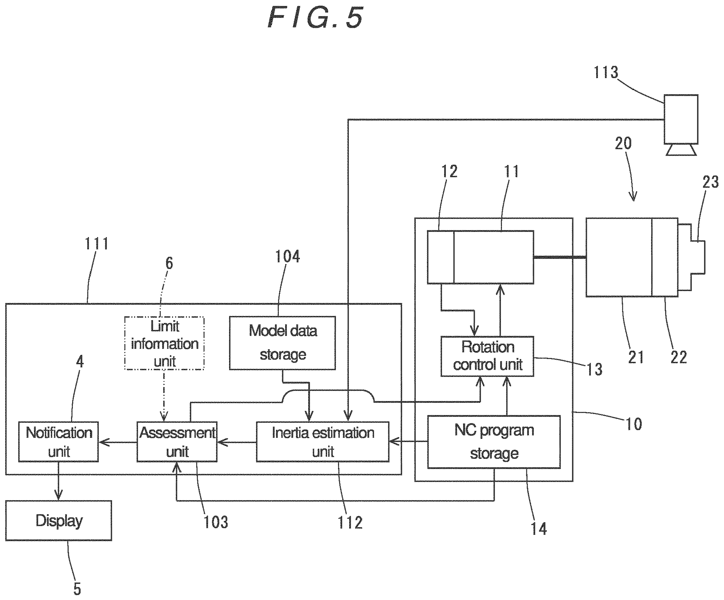

Next, a rotation speed assessment device according to a third embodiment of the present invention is described with reference to FIG. 5. This rotation speed assessment device 111 is different from the rotation speed assessment device 101 according to the second embodiment in that the inertia of the spindle motor 11 and object to be rotated 20 is estimated differently. In terms of the differences in configuration, a camera 113 is provided in the machine tool and the rotation speed assessment device 111 has an inertia estimation unit 112 that carries out a process different from that carried out by the inertia estimation unit 102. Except for these differences, the rotation speed assessment device 111 is identical to the rotation speed assessment device 101 according to the second embodiment. Therefore, the components of the rotation speed assessment device 111 identical to those of the rotation speed assessment device 1 and rotation speed assessment device 101 are denoted by the same reference numerals as used for the rotation speed assessment devices 1 and 101. The rotation device 10 and the object to be rotated 20 are also identical to those in the first and second embodiments.

0066 The camera 113 images the interior of a machining area of the NC lathe. In particular, the camera 113 is configured to be able to capture an image of the appearances of the chuck 22 and workpiece 23.

0067 When the NC program stored in the NC program storage 14 is to be executed, the inertia estimation unit 112 obtains from the camera 113 an image captured by the camera 113. The inertia estimation unit 112 recognizes the workpiece shape by processing the obtained image and recognizes the material corresponding to the recognized workpiece shape by referring to the model data storage 104. Further, the inertia estimation unit 112 also recognizes the shapes and materials of the rotor unit of the spindle motor 11, spindle 21, and chuck 22 by referring to the model data storage 104.

0068 The inertia estimation unit 112 subsequently estimates the masses of the spindle motor 11, spindle 21, chuck 22, and workpiece based on the obtained shapes and materials of them and theoretically estimates the total inertia I of them. Thereafter, the inertia estimation unit 112 transmits information on the inertia I to the assessment unit 103.

0069 This third embodiment is different from the second embodiment in that the workpiece shape is recognized based on an image of the workpiece captured by the camera 113.

0070 Above have been described specific embodiments of the present invention. However, it should be noted that the present invention is not limited to the above-described embodiments and can be implemented in other manners. For example, the rotation speed assessment devices according to the above-described first, second, and third embodiments are configured such that the assessment unit 3 or the assessment unit 103 calculates the allowable rotation speed $\omega_{aw}$ with respect to the inertia I or the allowable inertia $I_{aw}$ with respect to the rotation speed in accordance with an equation. However, the present invention is not limited to such a configuration. As illustrated in FIGS. 1, 4, and 5, the rotation speed assessment devices may have a limit information storage 6 into which the allowable rotation speed $\omega_{aw}$ with respect to the inertia I or the allowable inertia $I_{aw}$ with respect to the rotation speed is stored in advance. In this case, the assessment unit 3 and the assessment unit 103 use the allowable rotation speed $\omega_{aw}$ or allowable inertia $I_{aw}$ stored in the limit information storage 6 to assess whether the rotation speed $\omega$ of the spindle motor 11 is suitable or unsuitable.

0071 Further, the above-described rotation speed assessment devices are configured such that, when the rotation speed $\omega$ is assessed as unsuitable by the assessment unit 3 or the assessment unit 103, a deceleration command for reducing the rotation speed $\omega$ to the allowable rotation speed $\omega_{aw}$ is transmitted from the assessment unit 3 or the assessment unit 103 to the rotation control unit 13 so that the rotation speed $\omega$ of the spindle motor 11 is reduced to the allowable rotation speed $\omega_{aw}$. However, the present invention is not limited to this configuration, and the rotation speed assessment devices may be configured such that such a deceleration command is not transmitted from the assessment unit 3 or the assessment unit 103 to the rotation control unit 13. In this case, a person involved such as an operator can take an action, such as stopping the spindle motor, upon recognizing the assessment result displayed on the display 5.

0072 Further, the notification by the notification unit 4 is not limited to the above-described manners and may be performed in any manner as long as the assessment result is notified to the outside.

0073 Further, the object to be rotated 20 in the above-described embodiments is constituted by the spindle 21, the chuck 22, and the workpiece 23. It is to be understood that the present invention is not limited to such an object to be rotated. By way of example, in the field of machine tools, the object to be rotated may be constituted by a spindle and a tool attached to the spindle.

0074 As already mentioned above, the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims.

Reference Signs List

0075

| | |
|---|---|
| 1 | Rotation speed assessment device |
| 2 | Inertia estimation unit |
| 3 | Assessment unit |
| 4 | Notification unit |
| 5 | Display |
| 10 | Rotation device |
| 11 | Spindle motor |
| 12 | Rotary encoder |
| 13 | Rotation control unit |
| 20 | Object to be rotated |
| 21 | Spindle |
| 22 | Chuck |
| 23 | Workpiece |

**Claims**

1. A rotation speed assessment device assessing suitability of a rotation speed of a motor of a rotation device having the motor and a rotation control unit, the motor being connected to an object to be rotated to rotate the object to be rotated, the rotation control unit controlling operation of the motor and carrying out emergency stopping of the motor when the motor becomes uncontrollable due to interruption of electricity supply to the motor while the motor is in operation, the rotation speed assessment device comprising:

    an inertia estimation unit configured to estimate an inertia of the motor and object to be rotated;
    an assessment unit configured to assess, based on the inertia estimated by the inertia estimation unit, whether a planned rotation speed of the motor planned as a control target in the rotation control unit is suitable or unsuitable in terms of whether the planned rotation speed allows the emergency stopping of the motor to be carried out within an allowable time; and
    a notification unit configured to, when the planned rotation speed is assessed as unsuitable by the assessment unit, provide a notification that the planned rotation speed is unsuitable.

2. The rotation speed assessment device according to claim 1, **characterized in that** the assessment unit is configured to assess the planned rotation speed as unsuitable when the inertia estimated by the inertia estimation unit exceeds an allowable inertia allowed with respect to the planned rotation speed.

3. The rotation speed assessment device according to claim 1, **characterized in that** the assessment unit is configured to assess the planned rotation speed as unsuitable when the planned rotation speed exceeds an allowable rotation speed allowed with respect to the inertia estimated by the inertia estimation unit.

4. The rotation speed assessment device according to any one of claims 1 to 3, **characterized in that** the inertia estimation unit is configured to obtain from outside three-dimensional model data set for the object to be rotated and estimate the inertia of the object to be rotated based on the obtained three-dimensional model data.

5. The rotation speed assessment device according to any one of claims 1 to 3, **characterized in that** the inertia estimation unit is configured to obtain from outside an image of the object to be rotated captured by a camera and estimate the inertia of the object to be rotated based on the obtained image.

6. The rotation speed assessment device according to any one of claims 1 to 3, **characterized in that** the inertia estimation unit is configured to obtain an acceleration time taken for the motor to reach the planned rotation speed as well as the planned rotation speed from the rotation device when the motor is rotated at the planned rotation speed and estimate the inertia of the motor and object to be rotated based on the obtained acceleration time and planned rotation speed.

7. The rotation speed assessment device according to any one of claims 1 to 6, **characterized in that** the assessment unit is configured to, when the planned rotation speed is assessed as unsuitable, estimate a rotation speed allowed with respect to the estimated inertia and transmit data on the estimated rotation speed to the rotation control unit of the rotation device.

*FIG. 1*

EP 4 207 578 A1

# FIG.2

Circuit diagram inclusive of spindle motor (synchronous motor) stop circuit for short circuit

Coil  V: Induced voltage

R

L

Z: Impedance

0V

0V

0V

*FIG.3*

EP 4 207 578 A1

FIG. 4

# FIG. 5

**INTERNATIONAL SEARCH REPORT**

International application No.

PCT/JP2021/016636

### A. CLASSIFICATION OF SUBJECT MATTER
H02P 3/22(2006.01)i
FI: H02P3/22 A

According to International Patent Classification (IPC) or to both national classification and IPC

### B. FIELDS SEARCHED
Minimum documentation searched (classification system followed by classification symbols)
H02P3/22

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-225034 A (BROTHER INDUSTRIES, LTD.) 07 October 2010 (2010-10-07) paragraphs [0001], [0030], fig. 1 | 1–7 |
| A | JP 2015-127067 A (FANUC CORPORATION) 09 July 2015 (2015-07-09) claim 4 | 1–7 |
| A | JP 2007-052590 A (YASKAWA ELECTRIC CORPORATION) 01 March 2007 (2007-03-01) paragraph [0008] | 1–7 |
| A | JP 2006-011730 A (SANYO DENKI CO., LTD.) 12 January 2006 (2006-01-12) claim 3, paragraphs [0012], [0024], fig. 1 | 1–7 |

☐ Further documents are listed in the continuation of Box C. ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 08 June 2021 (08.06.2021) | 22 June 2021 (22.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2021/016636 |

| Patent Documents referred in the Report | Publication Date | Patent Family | Publication Date |
| --- | --- | --- | --- |
| JP 2010-225034 A | 07 Oct. 2010 | (Family: none) | |
| JP 2015-127067 A | 09 Jul. 2015 | US 2015/0186556 A1 claim 4 DE 102014119129 A1 CN 204397453 U | |
| JP 2007-052590 A | 01 Mar. 2007 | (Family: none) | |
| JP 2006-011730 A | 12 Jan. 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6285477 B